# EUROPÄISCHE PATENTSCHRIFT

(11) **EP 1 101 664 B1**
(45) Veröffentlichungstag und Bekanntmachung des Hinweises auf die Patenterteilung: **01.02.2006**
(21) Anmeldenummer: 00122398.1
(22) Anmeldetag: 26.10.2000
(51) Int. Cl.: B60R 21/20

(54) **Anordnung eines Seitenairbagmoduls in einem Fahrzeugsitz eines Kraftfahrzeugs**
Side airbag module arrangement in a motor vehicle seat
Agencement d'un module de coussin gonflable latéral dans un siège de véhicule automobile

(30) Priorität: 20.11.1999 DE 19955938
(43) Veröffentlichungstag der Anmeldung: 23.05.2001
(73) Patentinhaber: Volkswagen Aktiengesellschaft, 38436 Wolfsburg (DE)
(72) Erfinder: Schawe, Sven, 38120 Braunschweig (DE)

(56) Entgegenhaltungen:
- EP-A- 0 768 216
- EP-A- 0 788 940
- DE-A- 19 860 312
- DE-C- 19 605 621

## Beschreibung

Die vorliegende Erfindung betrifft eine Anordnung eines Seitenairbagmoduls in einem Fahrzeugsitz eines Kraftfahrzeugs, insbesondere eine Anordnung bei der der Fahrzeugsitz eine Rückenlehne mit einer rückwärtigen schalenförmigen Lehnenabdeckung umfaßt und bei der das Seitenairbagmodul im Bereich einer der Längsseiten der Rückenlehne in dieser angeordnet ist.

Solche Anordnungen sind beispielsweise bekannt aus der DE 198 60 312 A1; EP 788 940 A2 oder EP 768 216 A1. Die letztgenannte Schrift offenbart die Anordnung eines Seitenaubagmoduls gemäß Oberbegriff des Anspruch 1 und eine starre Lehnenabdeckung hinter deren seitlicher Abdeckung ein Airbagmodul mit einem Airbag untergebracht ist. Zur Freigabe einer Entfaltungsöffnung für den Airbag ist in der Lehnenabdeckung eine Klappe ausgebildet.

Die DE 196 05 621 C1 offenbart einen Profilschenkel in einer Sitzstruktur zum Schutze des Airbagmoduls vor Beschädigungen. Der Profilschenkel ersteckt sich bis zur Austrittsöffnung, die von einer Klappe abgedeckt wird.

Eine weitere Anordnung ist aus dem deutschen Gebrauchsmuster DE 298 07 644 U1 bekannt. Bei dem darin beschriebenen Seitenairbagmodul wird mittels entsprechend angeordneten Sollbruchstellen erreicht, daß bei einem Auslösen des Seitenairbagmoduls die im Bereich der Längsseite der Rückenlehne angeordnete Seitenfläche des Airbagmoduls um eine Schwenkachse herum aufklappen kann, die an der hinteren äußeren Ecke des Seitenairbagmoduls angebracht ist. Auf diese Weise wird erreicht, daß sich der Seitenairbag im Falle seiner Aktivierung von der Rückenlehne nach vorne erstreckt. Als nachteilig hierbei erweist sich, daß der Seitenairbag nicht in einem Bereich angeordnet werden kann, in dem sich die seitlichen Abschnitte der rückwärtigen schalenförmigen Lehnenabdeckung erstrecken, da diese durch eine im Auslösefall des Seitenairbags mit großer Kraftwirkung nach außen gedrückte Klappe beschädigt werden, insbesondere zersplittern könnten, wodurch Teile dieser Abschnitte im Crashfall durch den Innenraum des Kraftfahrzeugs geschleudert werden könnten.

Das der vorliegenden Erfindung zugrundeliegende Problem ist die Schaffung einer Anordnung der eingangs genannten Art, bei der die rückwärtige schalenförmige Lehnenabdeckung bei Auslösung des Seitenairbagmoduls durch dieses nicht beschädigt werden kann.

Dies wird erfindungsgemäß dadurch erreicht, daß das Seitenairbagmodul im Bereich der entsprechenden Längsseite der Rückenlehne zumindest teilweise von der Lehnenabdeckung nach außen abgedeckt wird und daß zwischen dem Seitenairbagmodul und der Lehnenabdeckung ein Verstärkungsteil angeordnet ist, das bei Aktivierung des Seitenairbagmoduls ein Heraustreten des Airbags in dem von der Lehnenabdeckung nach außen abgedeckten Bereich des Seitenairbagmoduls verhindert. Aufgrund dieses Verstärkungsteils besteht somit die Möglichkeit, unabhängig von der Ausdehnung der seitlichen Abschnitte einer rückwärtigen schalenförmigen Lehnenabdeckung das Seitenairbagmodul in der Rückenlehne des Fahrzeugsitzes anzuordnen. Die Seitenfläche oder Kappe des Seitenairbagmoduls wird durch dieses Verstärkungsteil daran gehindert, mit großer Kraft gegen die seitlichen Abschnitte der Lehnenabdeckung zu prallen, so daß diese nicht mehr zersplittern können. Es ergibt sich somit die Möglichkeit, das Seitenairbagmodul teilweise durch die Lehnenabdeckung zu überdecken.

Vorteilhafterweise ist das Verstärkungsteil als im von der Lehnenabdeckung nach außen abgedeckten Bereich an dem Seitenairbagmodul anliegendes Blech ausgeführt. Dieses kann aus Metall oder einem anderen geeigneten Material bestehen. Aufgrund der Tatsache, daß das Seitenairbagmodul bzw. seine seitliche Fläche oder bei einer Auslösung sich öffnende Kappe im Bereich der Lehnenabdeckung von dem Blech abgedeckt wird, dient die vordere Kante dieses Bleches als Scharnierlinie, um die herum der in Fahrzeugrichtung vor dieser Linie angeordnete Abschnitt der Seitenfläche bzw. Kappe des Seitenairbagmoduls bei Aktivierung des Seitenairbagmoduls nach außen aufklappt.

Vorzugsweise kann das Verstärkungsteil mit Aussparungen zur Gewichtsreduzierung versehen sein.

Gemäß einer Ausführungsform der vorliegenden Erfindung ist das Verstärkungsteil an dem Seitenairbagmodul befestigt. Hierzu kann beispielsweise das Verstärkungsteil ausgehend von einer außen an dem Seitenairbagmodul anliegenden Seitenfläche obere und untere Flächen aufweisen, die an der Ober- und der Unterseite des Seitenairbagmoduls verlaufen und an ihren von der Seitenfläche abgewandten Enden das Seitenairbagmodul in Form von Umbiegungen umgreifen, wobei diese Umbiegungen an dem Seitenairbagmodul befestigt sind. Auf diese Weise ergibt sich eine sichere Befestigung des Verstärkungsteils, das das Seitenairbagmodul in dem von der Lehnenabdeckung abgedeckten Bereich sowohl an der Außenseite als auch an der Ober-und der Unterseite des Seitenairbagmoduls sicher umgibt.

Gemäß einer alternativen Ausführungsform der vorliegenden Erfindung kann das Verstärkungsteil im Inneren der Rückenlehne an entsprechenden Rahmenteilen der Rückenlehne befestigt sein. Hierzu kann das Verstärkungsteil ebenfalls ausgehend von einer an der Außenseite des Seitenairbagmoduls anliegenden Seitenfläche obere und untere Flächen aufweisen, die oberhalb und unterhalb des Seitenairbagmoduls verlaufen und an ihren von der Seitenfläche abgewandten Enden in Umbiegungen übergehen, die sich voneinander weg erstrecken, wobei diese Umbiegungen an Rahmenteilen der Rückenlehne befestigt sind. Auch bei dieser alternativen Ausführungsform der vorliegenden Erfindung sind die von der Lehnenabdeckung abgedeckten Bereiche des Seitenairbagmoduls sicher an dessen Außenseite sowie dessen oberer und unterer Seite von dem Verstärkungsteil abgedeckt.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Seitenansicht eines Fahrzeugsitzes mit einer erfindungsgemäßen Anordnung;
- Fig. 2: eine teilweise geschnittene schematische Draufsicht auf die Rückenlehne des Fahrzeugsitzes gemäß Fig. 1;
- Fig. 3: eine Seitenansicht auf ein Seitenairbagmodul mit einem erfindungsgemäßen Verstärkungsteil;
- Fig. 4: eine Ansicht gemäß dem Pfeil IV in Fig. 3;
- Fig. 5: eine Fig. 4 entsprechende Ansicht einer weiteren Ausführungsform eines erfindungsgemäßen Verstärkungsteils für ein Seitenairbagmodul.

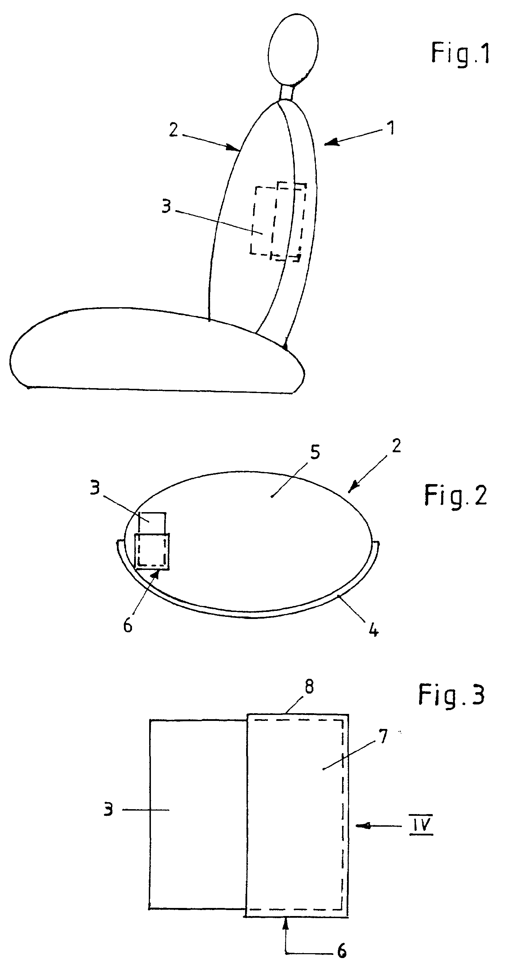

Aus Fig. 1 ist ein Fahrzeugsitz 1 mit einer Rückenlehne 2 ersichtlich. In die Rückenlehne 2 ist ein Seitenairbagmodul 3 integriert.

Aus der Draufsicht in Fig. 2 ist deutlich ersichtlich, daß die Rückenlehne 2 des Fahrzeugsitzes 1 eine rückwärtige schalenförmige Lehnenabdeckung 4 und eine vorderseitige teilweise von der Lehnenabdeckung 4 umgriffene Polsterung 5 umfaßt. Aus Fig. 2 ist ebenfalls ersichtlich, daß das Seitenairbagmodul in Fahrzeuglängsrichtung eine größere Ausdehnung als in Fahrzeugquerrichtung aufweist und seitlich etwa zur Hälfte von der Lehnenabdeckung 4 umgriffen wird. In dem Bereich, in dem das Seitenairbagmodul 3 von der Lehnenabdeckung 4 umgriffen wird, ist das Seitenairbagmodul 3 von einem erfindungsgemäßen Verstärkungsteil 6 teilweise abgedeckt.

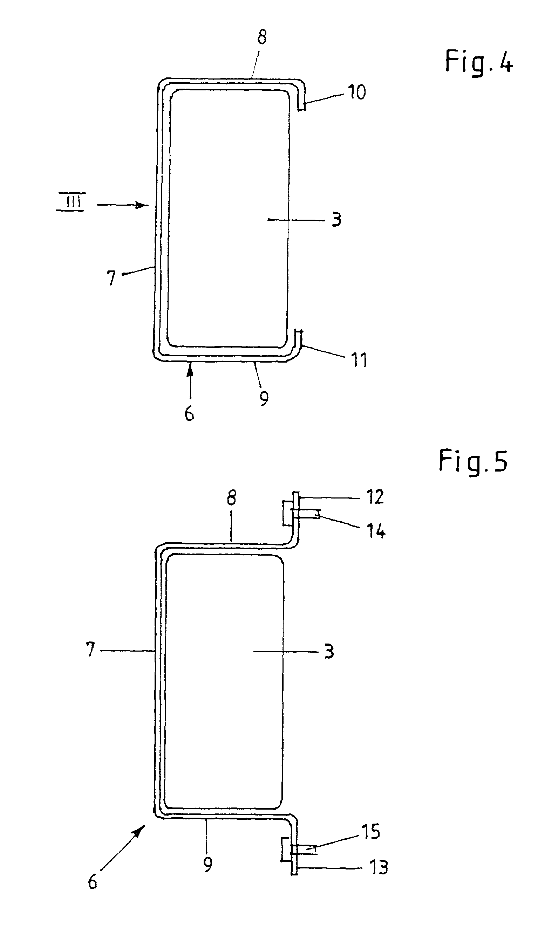

Dies ist für eine Ausführungsform des Verstärkungsteils 6 deutlich aus den Fig. 3 und Fig. 4 ersichtlich. Das Verstärkungsteil 6 umgreift den in Fahrzeuglängsrichtung hinteren Teil des Seitenairbagmoduls 3 derart, daß sowohl die Oberseite, als auch die Unterseite und die der Lehnenabdeckung 4 zugewandte Seite des Seitenairbagmoduls von der Abdeckung 6 umgeben sind. Dazu weist das in Fig. 4 abgebildete Verstärkungsteil 6 eine Seitenfläche 7 sowie zwei sich von dieser etwa senkrecht wegerstreckende obere und untere Flächen 8, 9 auf, die an ihren von der Seitenfläche 7 abgewandten Enden in Umbiegungen 10, 11 übergehen, die aufeinanderzu gerichtet sind. Diese Umbiegungen 10, 11 umgreifen letztlich das Airbagmodul 3 auf seiner von dem seitlichen Abschnitt der Lehnenabdeckung 4 abgewandten Seite. Bei der Ausführungsform gemäß Fig. 4 kann das Verstärkungsteil 6 beispielsweise im Bereich der Umbiegungen 10, 11 an den Seitenairbagmodul angeschraubt werden.

Bei der in Fig. 5 abgebildeten Ausführungsform eines erfindungsgemäßen Verstärkungsteils schließen sich an die von der Seitenfläche 7 abgewandten Enden der oberen und unteren Flächen 8, 9 Umbiegungen 12, 13 an, die sich voneinander wegerstrecken, so daß sie mit Hilfe geeigneter Befestigungselemente 14, 15, wie beispielsweise Schrauben, an nicht abgebildeten Rahmenteilen des Fahrzeugsitzes 1 befestigt werden können. Bei dieser Ausführungsform geschieht somit das Befestigen des Verstärkungsteils 6 nicht durch Umgreifung des Seitenairbagmoduls 3, sondern durch entsprechende separate Befestigung an entsprechenden Rahmenteilen des Fahrzeugsitzes 1.

Die Seitenfläche 7 und/oder die oberen und unteren Flächen 8, 9 können mit nicht abgebildeten Aussparungen zur Gewichtsreduzierung versehen werden.

### BEZUGSZEICHENLISTE

- 1: Fahrzeugsitz
- 2: Rückenlehne
- 3: Seitenairbagmodul
- 4: rückwärtige schalenförmige Lehnenabdeckung
- 5: Polsterung
- 6: Verstärkungsteil
- 7: Seitenfläche von 6
- 8: obere Fläche von 6
- 9: untere Fläche von 6
- 10: Umbiegungen von 6
- 11: Umbiegungen von 6
- 12: Umbiegungen von 6
- 13: Umbiegungen von 6
- 14: Befestigungselement
- 15: Befestigungselement

## Patentansprüche

1. Anordnung eines Seitenairbagmoduls in einem Fahrzeugsitz eines Kraftfahrzeugs, wobei der Fahrzeugsitz (1) eine Rückenlehne (2) mit einer rückwärtigen schalenförmigen Lehnenabdeckung (4) umfaßt und wobei das Seitenairbagmodul (3) im Bereich einer der Längsseiten der Rückenlehne (2) in dieser angeordnet und zumindest teilweise von der Lehnenabdeckung (4) nach außen abgedeckt ist, **dadurch gekennzeichnet, daß** zwischen dem Seitenairbagmodul (3) und der Lehnenabdeckung (4) ein Verstärkungsteil (6) angeordnet ist, das eine sich öffnende Kappe des Seitenairbagmoduls (3) im Bereich der Lehnenabdeckung (4) abdeckt, wobei die vordere Kante dieses Verstärkungsteils (6) als Scharnierlinie dient, um die herum der in Fahrzeugrichtung vor dieser Linie angeordnete Abschnitt der Kappe des Seitenairbagmoduls bei Aktivierung des Seitenairbagmoduls nach außen aufklappt, so dass bei Aktivierung des Seitenairbagmoduls (3) ein Heraustreten des Airbags in den von der Lehnenabdeckung (4) nach außen abgedeckten Bereich des Seitenairbagmoduls (3) verhindert wird.

2. Anordnung nach Anspruch 1, **dadurch gekennzeichnet, daß** das Verstärkungsteil (6) als im von der Lehnenabdeckung (4) nach außen abgedeckten Bereich an dem Seitenairbagmodul (3) anliegendes Blech ausgeführt ist.

3. Anordnung nach einem der Ansprüche 1 oder 2, **dadurch gekennzeichnet, daß** das Verstärkungsteil (6) mit Aussparungen zur Gewichtsreduzierung versehen ist.

4. Anordnung nach einem der Ansprüche 1 bis 3, **dadurch gekennzeichnet, daß** das Verstärkungsteil (6) an dem Seitenairbagmodul (3) befestigt ist.

5. Anordnung nach Anspruch 4, **dadurch gekennzeichnet, daß** das Verstärkungsteil (6) ausgehend von einer außen an dem Seitenairbagmodul (3) anliegenden Seitenfläche (7) obere und untere Flächen (8, 9) aufweist, die an der Ober- und der Unterseite des Seitenairbagmoduls (3) verlaufen und an ihren von der Seitenfläche (7) abgewandten Enden das Seitenairbagmodul (3) in Form von Umbiegungen (10, 11) umgreifen, wobei diese Umbiegungen (10, 11) an dem Seitenairbagmodul (3) befestigt sind.

6. Seitenairbagmodul nach einem der Ansprüche 1 bis 3, **dadurch gekennzeichnet, daß** das Verstärkungsteil (6) im Inneren der Rückenlehne (2) an entsprechenden Rahmenteilen der Rückenlehne (2) befestigt ist.

7. Anordnung nach Anspruch 6, **dadurch gekennzeichnet, daß** das Verstärkungsteil (6) ausgehend von einer an der Außenseite des Seitenairbagmoduls (3) anliegenden Seitenfläche (7) obere und untere Flächen (8, 9) aufweist, die oberhalb und unterhalb des Seitenairbagmoduls verlaufen und an ihren von der Seitenfläche (7) abgewandten Enden in Umbiegungen (12, 13) übergehen, die sich voneinander wegerstrecken, wobei die Umbiegungen (12, 13) an Rahmenteilen der Rückenlehne (2) befestigt sind.

8. Verstärkungsteil für eine Anordnung nach einem der Ansprüche 1 bis 7, **gekennzeichnet durch** die das Verstärkungsteil betreffenden Merkmale des Anspruchs 1 oder des Anspruchs 1 und einem oder mehrerer der Ansprüche 2 bis 7.

## Revendications

1. Agencement d'un module d'airbag latéral dans un siège d'un véhicule automobile, dans lequel le siège de véhicule (1) comprend un dossier (2) avec un revêtement de dossier arrière (4) en forme de coque et dans lequel le module d'airbag latéral (3) est disposé dans la région de l'un des côtés longitudinaux du dossier (2) dans ce dernier, et est au moins recouvert partiellement vers l'extérieur par le revêtement de dossier (4), **caractérisé en ce qu'**une partie de renforcement (6) est disposée entre le module d'airbag latéral (3) et le revêtement de dossier (4), laquelle recouvre un volet ouvrant du module d'airbag latéral (3) dans la région du revêtement de dossier (4), le bord avant de cette partie de renforcement (6) servant de ligne de charnière autour de laquelle la portion du volet du module d'airbag latéral, disposée dans la direction d'avance avant cette ligne, s'ouvre par pivotement vers l'extérieur lors de l'activation du module d'airbag latéral, de manière à empêcher une sortie de l'airbag dans la région du module d'airbag latéral (3) recouverte vers l'extérieur par le revêtement de dossier (4) lors de l'activation du module d'airbag latéral (3).

2. Agencement selon la revendication 1, **caractérisé en ce que** la partie de renforcement (6) est réalisée sous la forme de tôle s'appliquant contre le module d'airbag latéral (3) dans la région recouverte vers l'extérieur par le revêtement de dossier (4).

3. Agencement selon la revendication 1 ou 2, **caractérisé en ce que** la partie de renforcement (6) est pourvue d'évidements pour réduire le poids.

4. Agencement selon l'une quelconque des revendications 1 à 3, **caractérisé en ce que** la partie de renforcement (6) est fixée sur le module d'airbag latéral (3).

5. Agencement selon la revendication 4, **caractérisé en ce que** la partie de renforcement (6) présente, partant d'une surface latérale (7) s'appliquant à l'extérieur contre le module d'airbag latéral (3), des faces supérieure et inférieure (8, 9), qui s'étendent sur le côté supérieur et inférieur du module d'airbag latéral (3) et qui viennent en prise au niveau de leurs extrémités opposées à la surface latérale (7) autour du module d'airbag latéral (3) sous la forme de parties repliées (10, 11), ces parties repliées (10, 11) étant fixées sur le module d'airbag latéral (3).

6. Module d'airbag latéral selon l'une quelconque des revendications 1 à 3, **caractérisé en ce que** la partie de renforcement (6) est fixée à l'intérieur du dossier (2) contre des parties de cadre correspondantes du dossier (2).

7. Agencement selon la revendication 6, **caractérisé en ce que** la partie de renforcement (6), présente, partant d'une surface latérale (7) s'appliquant contre le côté extérieur du module d'airbag latéral (3), des faces supérieure et inférieure (8, 9) qui s'étendent au-dessus et en dessous du module d'airbag latéral et qui se prolongent, au niveau de leurs extrémités opposées à la surface latérale (7), par des parties repliées (12, 13) qui s'écartent l'une de l'autre, les parties repliées (12, 13) étant fixées à des parties de cadre du dossier (2).

8. Partie de renforcement pour un agencement selon l'une quelconque des revendications 1 à 7, **caractérisée par** les caractéristiques de la revendication 1 concernant la partie de renforcement ou de la revendication 1 et d'une ou plusieurs des revendications 2 à 7.

## Claims

1. Side airbag module arrangement in a motor vehicle seat, the vehicle seat (1) comprising a backrest (2) with a rear, shell-shaped backrest covering (4), and the side airbag module (3) being arranged in the backrest (2) in the region of one of the longitudinal sides thereof, and being at least partially covered to the outside by the backrest covering (4), **characterized in that** a reinforcing part (6) is arranged between the side airbag module (3) and the backrest covering (4) and covers an opening cap of the side airbag module (3) in the region of the backrest covering (4), the front edge of this reinforcing part (6) serving as a hinge line about which that section of the cap of the side airbag module which is arranged in front of this line in the direction of travel is folded up to the outside when the side airbag module is activated, with the result that, when the side airbag module (3) is activated, an emergence of the airbag into that region of the side airbag module (3) which is covered to the outside by the backrest covering (4) is prevented.

2. Arrangement according to Claim 1, **characterized in that** the reinforcing part (6) is designed as a plate which bears against the side airbag module (3) in the region covered to the outside by the backrest covering (4).

3. Arrangement according to either of Claim 1 and 2, chararacterized in that the reinforcing part (6) is provided with cutouts to reduce the weight.

4. Arrangement according to one of Claim 1 to 3, **characterized in that** the reinforcing part (6) is fastened to the side airbag module (3).

5. Arrangement according to Claim 4, **characterized in that** the reinforcing part (6) has, starting from a side surface (7) bearing on the outside against the side airbag module (3), upper and lower surfaces (8, 9) which run on the upper side and the lower side of the side airbag module (3) and engage at their ends facing away from the side surface (7) around the side airbag module (3) in the form of bent-over portions (10, 11), these bent-over portions (10, 11) being fastened to the side airbag module (3).

6. Side airbag module according to one of Claims 1 to 3, **characterized in that** the reinforcing part (6) is fastened in the interior of the backrest (2) to corresponding frame parts of the backrest (2).

7. Arrangement according to Claim 6, **characterized in that** the reinforcing part (6) has, starting from a side surface (7) bearing against the outside of the side airbag module (3), upper and lower surfaces (8, 9) which run above and below the side airbag module and at their ends facing away from the side surface (7) merge into bent-over portions (12, 13) which extend away from each other, the bent-over portions (12, 13) being fastened to frame parts of the backrest (2).

8. Reinforcing part for an arrangement according to one of Claims 1 to 7, **characterized by** those features of Claim 1 or of Claim 1 and one or more of Claims 2 to 7 that relate to the reinforcing part.
